# EUROPEAN PATENT SPECIFICATION

(11) **EP 2 484 590 B1**
(45) Date of publication and mention of the grant of the patent: **04.04.2018**
(21) Application number: 12154356.5
(22) Date of filing: 07.02.2012
(51) Int. Cl.: G05D 7/00, F01D 17/26, F01D 17/24

(54) **Airflow control system**
Luftstromsteuerungssystem
Système de contrôle du débit d'air

(30) Priority: 08.02.2011 US 201113022999
(43) Date of publication of application: 08.08.2012
(73) Proprietor: Hamilton Sundstrand Corporation, Windsor Locks, CT 06096-1010 (US)
(72) Inventor: Schroder, Bruce R., Agawam, MA 01001 (US); Ernst, Jeffrey, Wethersfield, CT 06109 (US)
(74) Representative: Lees, Gregory Alexander

(56) References cited:
- EP-A2- 1 873 430
- US-A- 3 769 998
- US-A- 5 230 362
- US-A1- 2003 145 603
- US-A1- 2003 192 595
- US-A1- 2006 102 232

## Description

### BACKGROUND

The subject matter disclosed herein relates to airflow control and, more particularly, to combined electric and pneumatic valve control.

Bleed systems on aircraft generally involve taking air from the aircraft engine, and regulating it down to a usable temperature and pressure. Pressure is usually regulated through valves, such as butterfly valves being opened certain amounts from zero to ninety degrees, to decrease or increase pressure downstream of the valve. The valves are generally either a proportional valve or an integrating valve, and can be controlled either pneumatically or electronically. Pneumatic control is done through physical components, flow passages, levers, etc. Electronic controls control the valve through electrical signals. An exemplary pneumatic valve is disclosed in EP 1873430. Electronic control systems are generally preferred as they allow for more flexibility in control and upgrading or upkeep as compared to pneumatic control systems. This is because upgrading can be done by changing software controlling the valve in electronic systems rather than physically changing components in pneumatic systems. An electronically controlled proportional valve generally is operated by receiving an electrical control signal which corresponds to a valve position. An electronically controlled integrating valve is controlled with an electrical signal that corresponds to a valve velocity, causing the valve to open or close due to the valve travelling at a velocity for a certain amount of time.

It is important to try to maintain stable pressures in the bleed system to improve performance and decrease wear on the system. This includes resisting cycling and input disturbances in the system. Cycling is when pressure values downstream of the valve cycle throughout a range of pressures, to average out to the desired pressure. For example, if the desired pressure is 45 psig (310 kPa gauge), but it is cycling from 40 psig to 50 psig (276 kPa to 379 kPa gauge) to get an average of 45 psig (310 kPa gauge), that cycling creates a lot of extra wear on system components from the constant fluctuations. The cycling can be due in part to frictional forces that must be overcome to open or close valve. The overcoming of the frictional forces can result in a backlash of force due to the larger amount of force needed to overcome the initial frictional forces to initiate valve movement. Once the initial frictional forces are overcome, the valve can move very rapidly, which can turn into cycling if movement is too rapid and the desired target is overshot. Input disturbances (which can initiate cycling) come from things such as a change in throttle which causes a power change in the engine. Throttling up the engine can cause the pressure to quickly and dramatically change. The bleed system then responds to this rapid change, trying to regulate the pressure to a stable, usable level once again.

### SUMMARY

Viewed from a first aspect, the present invention provides an airflow control system for controlling pressure and flow through a flow passage with an upstream portion and a downstream portion, the system comprising: a valve which can open to different positions for controlling pressure at the downstream portion of the flow passage; a valve actuator which receives electrical signals to control the opening and closing of the valve wherein the valve actuator comprises: a first cylinder; a first piston with a first side and a second side for moving through the first cylinder; a second cylinder connected to the first cylinder; a second piston with a first side and a second side for moving through the second cylinder, and connected to the first piston to move with the first piston; a first pressure chamber defined by the first cylinder and the first side of first piston; a second pressure chamber defined by the second side of the first piston and the first side of the second piston; a third pressure chamber defined by the second cylinder and the second side of the second piston; a torque motor configured to control pressure in the first pressure chamber to move the first piston by modulating a restriction to allow pressure from the upstream portion of the flow passage to go into the first pressure chamber and/or by modulating the restriction to allow pressure to flow out of the first pressure chamber into an area of ambient pressure; an actuator flow passage connecting the upstream portion of the flow passage to the torque motor and to the third pressure chamber to supply pressure to the torque motor and to the third pressure chamber; and an actuator shaft connecting the valve to the first piston and the second piston which is configured to translate movement of the first piston and the second piston into a change of the valve position; and a pneumatic feedback system to stabilize the valve actuator, wherein the pneumatic feedback system comprises: a feedback flow passage connecting the downstream portion of the flow passage to the second pressure chamber; and a pressure drop component so that the feedback flow passage feeds a pressure less than the downstream pressure to the second pressure chamber to couple valve position to the pressure in the downstream portion of the flow passage.

Viewed from a second aspect, the prevent invention provides a method of increasing stability of an electronically controlled valve which regulates pressure at a portion of a flow passage which is downstream of the valve, the method comprising: controlling a valve position through a valve actuator which receives electrical signals wherein the step of controlling valve position through a valve actuator comprises: supplying pressure from a portion of the flow passage upstream of the valve to a torque motor and to a third pressure chamber; and sending an electrical signal to the torque motor to increase or decrease pressure in a first pressure chamber to provide an opening or a closing force for the valve; and stabilizing the valve actuator by providing pneumatic feedback to the valve actuator from the portion of the flow passage which is downstream of the valve, wherein the step of stabilizing the valve actuator by providing pneumatic feedback to the valve actuator from the portion of the flow passage which is downstream of the valve comprises: supplying pressure from a portion of the flow passage which is downstream of the valve; decreasing the pressure further through the use of a pressure decreasing component; and introducing the further decreased pressure to a second pressure chamber to act as a stabilizing force on the valve actuator.

### BRIEF DESCRIPTION OF THE DRAWINGS

FIG. 1 is a block diagram of a valve according to a first embodiment of the current invention.
FIG. 2 is a block diagram of a valve according to a second embodiment of the current invention.

### DETAILED DESCRIPTION

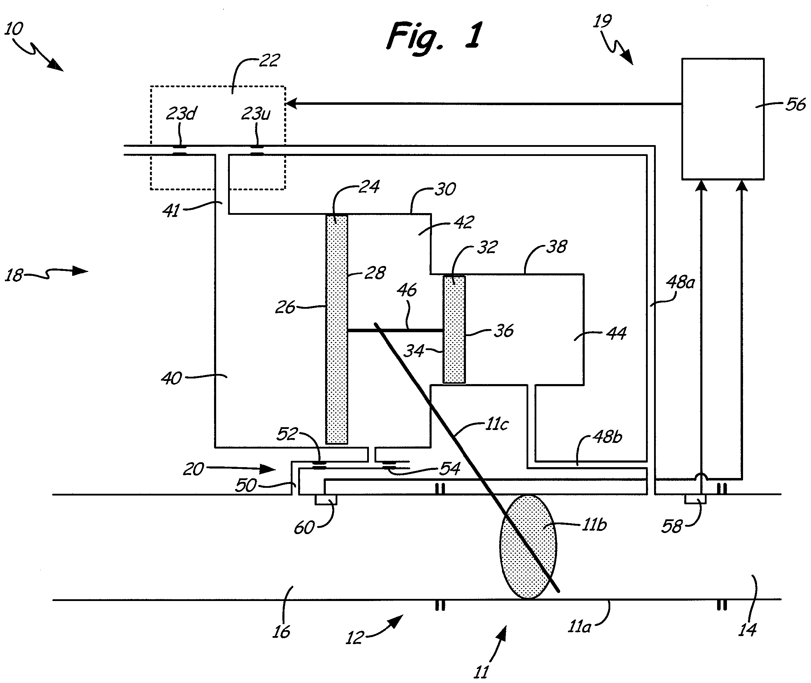

FIG. 1 is a block diagram of a valve according to a first embodiment of the current invention, and includes airflow control system 10 with butterfly valve 11 (with valve housing 11a, disk 11b and shaft 11c), flow passage 12 (with upstream portion 14 and downstream portion 16), valve actuator 18, electronic control system 19 and pneumatic feedback system 20. Valve actuator 18 includes torque motor 22 with modulating flow restrictions 23ᵤ and 23_{d}, first piston 24 (with first side 26 and second side 28) in first cylinder 30, second piston 32 (with first side 34 and second side 36) in second cylinder 38, first pressure chamber 40 with flow passage 41, second pressure chamber 42, third pressure chamber 44, connection rod 46, and actuator flow passages 48a, 48b. Pneumatic feedback system 20 includes feedback flow passage 50 with flow restrictions 52 and 54. Electronic control system 19 includes valve controller 56, upstream pressure sensor 58 and downstream pressure sensor 60. While airflow control system 10 uses upstream pressure sensor 58 for electronic control system 19 to anticipate downstream pressure changes, alternative embodiments do not include upstream pressure sensor 58.

Butterfly valve 11 sits in flow passage 12 and disc 11b can rotate between zero and ninety degrees. First piston 24 sits in first cylinder 30. Second piston 32 sits in second cylinder 38. First piston 24 is attached to second piston 32 by connection rod 46. Shaft 11c connects disc 11b to connection rod 46. Flow passage 48a connects upstream portion 14 of flow passage 12 to torque motor 22 and flow passage 48b connects upstream portion 14 of flow passage 12 to third pressure chamber 44. Torque motor 22 connects to first pressure chamber 40 via flow passage 41. Flow passage 50 of pneumatic feedback system 20 connects downstream portion 16 of flow passage 12 to second pressure chamber 42. Controller 56 connects to torque motor 22 and to upstream pressure sensor 58 (when applicable) and downstream pressure sensor 60.

Valve actuator 18 works to rotate valve disk 11b to positions between zero degrees (fully closed) and ninety degrees (fully open) to regulate pressure in the downstream portion 16 of flow passage 12. Rotation is achieved through shaft 11c translating movement of first piston 24 and second piston 32 to rotate valve disk 11b via a lever arm or any other suitable mechanism for translating linear movement into rotation movement known in the art. First piston 24 and second piston 32 move together (due to connection rod 46), with first piston 24 moving through first cylinder 30 and second piston 32 moving through second cylinder 38. First piston 24 and second piston 32 move through cylinders 30, 38 due to respective pressures in first pressure chamber 40, second pressure chamber 42 and third pressure chamber 44. Pressure in first pressure chamber 40 acts on first side 26 of first piston 24. Pressure in first pressure chamber 40 acts an opening force for valve 11. Pressure in second pressure chamber 42 acts on second side 28 of first piston 24 more so than first side 34 of second piston 32 due to the larger surface area of first piston 24. Pressure in second pressure chamber 42 acts as a closing force on valve disk 11b. Pressure in third pressure chamber 44 acts on second side 36 of second piston 32, and acts as a closing force on valve disk 11b. Pressure in third pressure chamber 44 comes from flow passage 48b which feeds pressure from upstream portion 14 of flow passage 12 to third pressure chamber 44.

Pressure in first pressure chamber 40 is regulated by torque motor 22. Torque motor 22 receives pressure from upstream portion of flow passage 12 through flow passage 48a. Torque motor 22 then adjusts the respective sizes of flow restriction 23ᵤ, 23_{d} or both 23ᵤ and 23_{d} in accordance with whether it is trying to close or open valve 11. If torque motor 22 is acting to open valve 11, it will increase pressure in first pressure chamber 40. It will do this by increasing flow area 23ᵤ or decreasing flow area 23_{d} or both by increasing flow area 23ᵤ and decreasing flow area 23_{d}. This will increase pressure in first pressure chamber 40 by forcing pressurized flow from flow passage 48a into first pressure chamber 40 via flow passage 41. This will increase force on first side 26 of first piston 24, causing first piston 24 (and second piston 32) to move. Shaft 11c will translate that movement of pistons 24, 32 into rotation to open valve disk 11b. If torque motor 22 is acting to close valve, it will decrease pressure in first pressure chamber 40 by decreasing flow area 23ᵤ or increasing flow area 23_{d} (which flows to an area of ambient air pressure) or both decreasing flow area 23ᵤ and increasing flow area 23_{d}. This will decrease pressure in first pressure chamber 40, allowing pressure in second pressure chamber 42 and third pressure chamber 44 to act as closing forces, moving first piston 24 and second piston 32, with shaft 11c translating that movement into a closing rotation for valve disk 11b.

Valve actuator 18 is controlled by electronic control system 19. Upstream pressure sensor 58 senses pressure in upstream portion 16 of flow passage 12 and sends a signal indicating the pressure at that point to controller 56. Controller 56 then sends an electrical signal in the form of current to torque motor 22 based on the pressure signal received from upstream pressure sensor 58 and the desired downstream pressure. Current sent to torque motor 22 causes torque motor 22 to modulate flow restrictions 23ᵤ or 23_{d} (or both) to either increase or decrease pressure in first pressure chamber 40 based on whether the upstream pressure indicates that valve 11 should be opened or closed (as described above). Torque motor 22 acts to modulate the applicable flow restrictions 23ᵤ and 23_{d}, which moves pistons 24 and 32, rotating valve disk 11b to either restrict flow or increase flow through flow passage 12. Downstream pressure sensor 60 then senses the pressure in downstream portion 16 of flow passage 12 and sends a signal to controller 56. Controller 56 registers this to determine if control signal sent to torque motor 22 needs to vary to cause valve to open or close to achieve the desired downstream pressure. This electronic control loop is continuous, always trying to achieve a steady, desired pressure value in downstream portion 16 of flow passage 12.

Pneumatic feedback system 20 uses flow passage 50, connected to downstream portion 16 of flow passage 12, to provide pneumatic feedback to valve actuator 18 and to stabilize the position of valve disk 11b. Flow passage 50 feeds the downstream pressure to second pressure chamber 42. Flow passage 50 can be connected to downstream portion 16 of flow passage either within or outside butterfly valve housing 11a. Flow restrictions 52 and 54 are set in flow passage 50 to decrease the pressure into second pressure chamber 42, to ensure that pressure flowing into second pressure chamber 42 is coupled to downstream pressure, but also some amount less than pressure in downstream portion 16. Pressure in second pressure chamber 42 acts as a closing force on valve 11, and must be some amount less than the pressure in downstream portion 16 of flow passage 12 to allow for full opening of valve 11 when desired. Delivering downstream pressure to second pressure chamber 42 helps to slow the movement of first piston 24 and second piston 32, therefore slowing valve disk 11b movement. This slowing of the movement stabilizes valve disk 11b and prevents overshoots which may otherwise lead to cycling. Feeding downstream pressure into second pressure chamber 42 also acts as a pneumatic feedback for valve actuator 18 by coupling downstream pressure to pressure in valve actuator 18. For example, if valve actuator 18 is trying to increase downstream pressure, controller 56 would send a signal to torque motor 22 which modulates applicable flow areas 23ᵤ and 23_{d} to increase pressure in first pressure chamber 40. Increased pressure in first pressure chamber 40 would cause first piston 24 (and second piston 32) to move, and shaft 11c would translate that movement into an opening force for the valve. However, if valve disk 11b opened too much, causing too great of an increase in pressure in downstream portion 16, that pressure (with a slight drop due to restrictions 52 and 54) would be fed back into second pressure chamber 42 and act as a closing force on valve actuator 18.

Actuator 18 with pneumatic feedback system 20 and electronic control system 19 allows for valve 11 to be lightweight, stable, and able to resist input disturbances. This is due to the pneumatic coupling of valve position with pressure in downstream portion 16 of flow passage 12. Past systems simply reacted to pressure in flow passage 12 in trying to regulate pressure in downstream portion 16 to a stable and usable value. The current invention uses both electronic controls (through pressure sensors 58, 60 and controller 56) and pneumatic feedback system 20 to control actuator 18 in regulating downstream pressure resulting in a more stable and accurate system. Pneumatic feedback system 20 works to pneumatically couple downstream pressure to valve disk 11b movement, ensuring airflow control system 10 can more stably and more accurately achieve a desired pressure in downstream portion 16 of flow passage 12. Pneumatic feedback system 20 also works to slow opening and closing movements of valve disk 11b, therefore reducing overshoot which result in cycling due to frictional forces, input disturbances or other stability issues.

Additionally, pneumatic feedback system 20 assists in keeping valve 11 controllable despite valve actuator 18 being small and lightweight. This is due to pneumatic feedback 20 introducing additional force into second pressure chamber 42, to counteract backlash due to frictional forces and other sudden changes which could result in less stable control. In some past systems, valve actuator 18 was made larger to overcome frictional forces and backlash when changing valve position. The current invention overcomes the destabilizing affects of frictional forces by using pneumatic feedback, allowing for economical and flexibility advantages of having a smaller valve actuator 18 while still having the improved controllability of larger valve actuators.

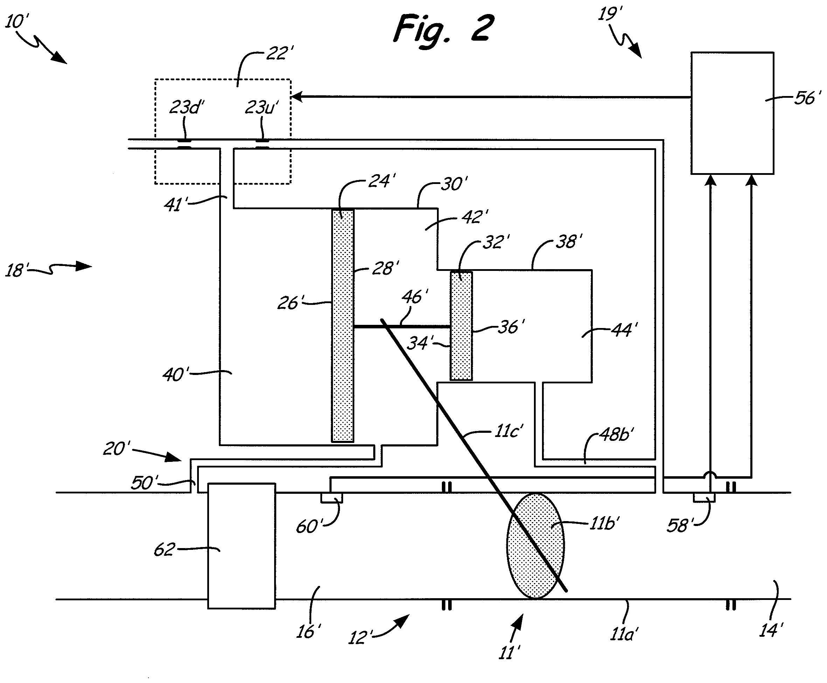

FIG. 2 is a block diagram of a valve according to a second embodiment of the current invention. FIG. 2 works much the same way as FIG. 1 and includes similar components. Components in FIG. 2 are numbered similarly to like components in FIG. 1. FIG. 2 includes airflow control system 10' with butterfly valve 11' (with valve housing 11a', disk 11b' and shaft 11c'), flow passage 12' with upstream portion 14' and downstream portion 16'; valve actuator 18', control system 19', pneumatic feedback system 20' and pre-cooler heat exchanger 62. Valve actuator 18' includes torque motor 22' with modulated flow areas 23ᵤ' and 23_{d}', first piston 24' (with first side 26' and second side 28') in first cylinder 30', second piston 32' (with first side 34' and second side 36') in second cylinder 38', first pressure chamber 40' with flow passage 41', second pressure chamber 42', third pressure chamber 44', connection shaft 46' and actuator flow passages 48a' and 48b'. Control system 19' includes controller 56', upstream pressure sensor 58' and downstream pressure sensor 60'. Pneumatic feedback system 20' includes feedback flow passage 50'.

Valve actuator 18' works much like valve actuator 18 in FIG. 1 to open and close valve 11' to regulate pressure in downstream portion 16' of flow passage 12'. Valve actuator 18' opens and closes valve 11' through moving first piston 24' and second piston 32' by torque motor 22' changing pressure in first pressure chamber 40' through modulating flow areas 23ᵤ' and 23_{d}'. Pre-cooler heat exchanger 62 creates a pressure drop in downstream portion 16' of flow passage 12'. The pressure after this pressure drop is then supplied to second pressure chamber 42' to give valve actuator 18' pneumatic feedback, coupling downstream pressure with valve actuator 18' pressure. This can slow valve disk 11b' movement by slowing movement of first and second pistons 24', 32'. While a pre-cooler heat exchanger 62 is shown, any component which results in a downstream pressure drop could be used, including bends, venturis, etc.

As in FIG. 1, valve actuator 18' with pneumatic feedback system 20' provides stable control for valve 11' which resists problems of backlash and cycling of past systems. Pneumatic feedback system 20' couples pressure in the downstream portion 16' of flow passage 12' (the pressure which is being regulated) to the movement of valve disk 11b'. In this second embodiment, the pressure is supplied downstream of a system component which creates a pressure drop. This pressure is supplied into second pressure chamber 42' to act on first piston 24' and second piston 32', coupling pressure in downstream portion 16' of flow passage 12' to valve disk 11b' movement, which is regulating that pressure. This ensures that pressure is regulated more accurately to achieve desired pressure levels downstream and also slows movement of pistons 24', 32', thus slowing movement of valve disk 11b', which reduces cycling. The plumbing pressure downstream from a component which creates a pressure drop ensures the valve 11' can be fully opened when desired.

In summary, each of airflow control system 10 and 10' is lightweight and provides stable control of a valve to achieve a desired downstream pressure in a flow passage through the use of an electronically controlled valve actuator with a pneumatic feedback system. The electronically controlled valve actuator allows for the ability to upgrade through software, while the pneumatic feedback system increases stability and control over cycling and provides the ability to couple downstream pressure that is being regulated with the valve that is regulating pressure. This allows for a stable and accurate regulation of downstream pressure through a flow passage. Additionally this allows for a lightweight valve resulting in economic benefits due to weight reduction of the system and less wear due to less cycling without loss of stability or control.

While FIGS. 1-2 show torque motor having two modulating flow areas (23ᵤ, 23_{d}), alternative embodiments could include one flow restriction and one modulating flow area to achieve the same results as using two modulating flow areas. The flow restriction could be located in the flow passage and not in the torque motor 22.

While the invention has been described with reference to exemplary embodiments, it will be understood by those skilled in the art that various changes may be made and equivalents may be substituted for elements thereof without departing from the scope of the invention, which is defined by the claims In addition, many modifications may be made to adapt a particular situation or material to the teachings of the invention without departing from the scope thereof. Therefore, it is intended that the invention not be limited to the particular embodiments disclosed, but that the invention will include all embodiments falling within the scope of the appended claims.

## Claims

1. An airflow control system (10;10') for controlling pressure and flow through a flow passage (12;12') with an upstream portion (14;14') and a downstream portion (16;16'), the system comprising:
a valve (11; 11') which can open to different positions for controlling pressure at the downstream portion of the flow passage;
a valve actuator (18;18') which receives electrical signals to control the opening and closing of the valve wherein the valve actuator comprises:
a first cylinder (30;30');
a first piston (24;24') with a first side (26;26') and a second side (28;28') for moving through the first cylinder;
a second cylinder (38;38') connected to the first cylinder;
a second piston (32;32') with a first side (34;34') and a second side (36;36') for moving through the second cylinder, and connected to the first piston to move with the first piston;
a first pressure chamber (40;40') defined by the first cylinder and the first side of first piston;
a second pressure chamber (42;42') defined by the second side of the first piston and the first side of the second piston;
a third pressure chamber (44;44') defined by the second cylinder and the second side of the second piston;
a torque motor (22;22') configured to control pressure in the first pressure chamber to move the first piston by modulating a restriction (23u;23u') to allow pressure from the upstream portion of the flow passage to go into the first pressure chamber and/or by modulating the restriction (23d;23d') to allow pressure to flow out of the first pressure chamber into an area of ambient pressure;
an actuator flow passage (41;48a,45b;41',48a'48b') connecting the upstream portion of the flow passage to the torque motor and to the third pressure chamber to supply pressure to the torque motor and to the third pressure chamber; and
an actuator shaft (11c;11c') connecting the valve to the first piston and the second piston which is configured to translate movement of the first piston and the second piston into a change of the valve position; and
a pneumatic feedback system (20;20') to stabilize the valve actuator, wherein the pneumatic feedback system comprises:
a feedback flow passage (50;50') connecting the downstream portion of the flow passage to the second pressure chamber; and
a pressure drop component (52,54;62) so that the feedback flow passage feeds a pressure less than the downstream pressure to the second pressure chamber to couple valve position to the pressure in the downstream portion of the flow passage.

2. The system of claim 1, wherein the pressure drop component comprises at least one of:
a first restriction (52) in the feedback flow passage, a second restriction (54) in the feedback flow passage, and an opening to an ambient pressure area;
a pre-cooler heat-exchanger (62) located in the downstream portion of the flow passage;
a bend located in the downstream portion of the flow passage; and
a venturi located in the downstream portion of the flow passage.

3. The system of claim 1 or 2 wherein the torque motor comprises:
a first modulating flow area (23ᵤ;23ᵤ') connected to the actuator flow passage and to the first pressure chamber; and
a second modulating flow area (23_{d};23_{d}') connected to an outlet to an ambient pressure area and to the first pressure chamber; and
wherein the torque motor modulates the first modulating flow area and the second modulating flow area to increase and decrease pressure in the first pressure chamber.

4. The system of claim 3, wherein the torque motor modulates the first modulating flow area and the second modulating flow area to increase or decrease pressure into the first pressure chamber based on an electric signal which corresponds to a valve position.

5. The system of any one of the preceding claims, wherein the pressure in the first pressure chamber acts as an opening force on the valve.

6. The system of any one of the preceding claims, wherein the pressures in the second pressure chamber and the third pressure chamber act as closing forces on the valve.

7. The system of any preceding claim, wherein the valve is a butterfly valve.

8. A hybrid valve system comprising the airflow control system of any preceding claim for controlling pressure in a flow passage at a portion of the flow passage downstream of the valve.

9. A method of increasing stability of an electronically controlled valve (11;11') which regulates pressure at a portion of a flow passage which is downstream of the valve, the method comprising:
controlling a valve position through a valve actuator (18;18') which receives electrical signals, wherein the step of controlling valve position through a valve actuator comprises:
supplying pressure from a portion (14;14') of the flow passage upstream of the valve to a torque motor (22;22') and to a third pressure chamber (44;44'); and
sending an electrical signal to the torque motor to increase or decrease pressure in a first pressure chamber (40;40') to provide an opening or a closing force for the valve; and
stabilizing the valve actuator by providing pneumatic feedback to the valve actuator from the portion (16;16') of the flow passage which is downstream of the valve, wherein the step of stabilizing the valve actuator by providing pneumatic feedback to the valve actuator from the portion of the flow passage which is downstream of the valve comprises:
supplying pressure from a portion of the flow passage which is downstream of the valve;
decreasing the pressure further through the use of a pressure decreasing component (52,54,56); and
introducing the further decreased pressure to a second pressure chamber (42;42') to act as a stabilizing force on the valve actuator.

10. The method of claim 9, wherein the pressure decreasing component is a plurality of restricted flow areas and an opening to an area of ambient pressure.

11. The method of claim 9, wherein the pressure decreasing component is a component in the downstream portion of the flow passage which creates a pressure drop.

12. The method of claim 11, wherein the component is one of a heat exchanger, a venturi or a bend in the flow passage.

13. The method of claim 11 or 12, wherein a feedback flow passage (50') connects the second pressure chamber to the flow passage downstream of the component which creates a pressure drop.

## Patentansprüche

1. Luftstromsteuerungssystem (10; 10') zum Steuern des Drucks und des Volumenstroms durch einen Strömungskanal (12; 12') mit einem stromaufwärtigen Abschnitt (14; 14') und einem stromabwärtigen Abschnitt (16; 16'), wobei das System Folgendes umfasst:
ein Ventil (11; 11'), das sich zu unterschiedlichen Stellungen zum Steuern des Drucks an dem stromabwärtigen Abschnitt des Strömungskanals öffnen kann;
ein Ventilstellglied (18; 18'), das elektrische Signale, zum Steuern des Öffnens und Schließens des Ventils empfängt, wobei das Ventilstellglied Folgendes umfasst:
einen ersten Zylinder (30; 30');
einen ersten Kolben (24; 24') mit einer ersten Seite (26; 26') und einer zweiten Seite (28; 28') zum Bewegen durch den ersten Zylinder;
einen zweiten Zylinder (38; 38'), der mit dem ersten Zylinder verbunden ist;
einen zweiten Kolben (32; 32') mit einer ersten Seite (34; 34') und einer zweiten Seite (36; 36') zum Bewegen durch den zweiten Zylinder, und mit dem ersten Kolben verbunden, um sich mit dem ersten Kolben zu bewegen;
eine erste Druckkammer (40; 40'), die durch den ersten Zylinder und die erste Seite des ersten Kolbens definiert ist;
eine zweite Druckkammer (42; 42'), die durch die zweite Seite des ersten Kolbens und die erste Seite des zweiten Kolbens definiert ist;
eine dritte Druckkammer (44; 44'), die durch den zweiten Zylinder und die zweite Seite des zweiten Kolbens definiert ist;
einen Drehmomentmotor (22; 22'), der ausgelegt ist, den Druck in der ersten Druckkammer zu steuern, um den ersten Kolben zu bewegen, durch Modulieren einer Verengung (23u; 23u'), um zu ermöglichen, dass Druck von dem stromaufwärtigen Abschnitt des Strömungskanals in die erste Druckkammer gelangt und/oder durch Modulieren der Verengung (23d; 23d'), um zu ermöglichen, das Druck aus der ersten Druckkammer in einen Umgebungsdruckbereich strömt;
einen Stellgliedströmungskanal (41; 48a, 45b; 41', 48a' 48b'), der den stromaufwärtigen Abschnitt des Strömungskanals mit dem Drehmomentmotor und mit der dritten Druckkammer verbindet, um den Drehmomentmotor und die dritte Druckkammer mit Druck zu beaufschlagen; und
eine Stellgliedwelle (11c; 11c'), die das Ventil mit dem ersten Kolben und dem zweiten Kolben verbindet, die ausgelegt ist, eine Bewegung des ersten Kolbens und des zweiten Kolbens in eine Änderung der Ventilstellung zu übersetzen; und
ein pneumatisches Rückkopplungssystem (20; 20'), um das Ventilstellglied zu stabilisieren, wobei das pneumatische Rückkopplungssystem Folgendes umfasst:
einen Rückkopplungsströmungskanal (50; 50'), der den stromabwärtigen Abschnitt des Strömungskanals mit der zweiten Druckkammer verbindet; und
eine Druckabfallkomponente (52, 54; 62), sodass der Rückkopplungsströmungskanal die zweite Druckkammer mit einem Druck, der kleiner als der stromabwärtige Druck ist, beaufschlagt, um die Ventilstellung mit dem Druck in dem stromabwärtigen Abschnitt des Strömungskanals zu koppeln.

2. System nach Anspruch 1, wobei die Druckabfallkomponente mindestens eines der Folgenden umfasst:
eine erste Verengung (52) in dem Rückkopplungsströmungskanal, eine zweite Verengung (54) in dem Rückkopplungsströmungskanal, und eine Öffnung zu einem Umgebungsdruckbereich;
einen Vorkühlerwärmetauscher (62), der in dem stromabwärtigen Abschnitt des Strömungskanals angeordnet ist;
eine Biegung, die in dem stromabwärtigen Abschnitt des Strömungskanals angeordnet ist; und
ein Venturi, das in dem stromabwärtigen Abschnitt des Strömungskanals angeordnet ist.

3. System nach Anspruch 1 oder 2, wobei der Drehmomentmotor Folgendes umfasst:
einen ersten Modulationsströmungsbereich (23ᵤ; 23ᵤ'), der mit dem Stellgliedströmungskanal und mit der ersten Druckkammer verbunden ist; und
einen zweiten Modulationsströmungsbereich (23_{d}; 23_{d}'), der mit einem Auslass zu einem Umgebungsdruckbereich und zu der ersten Druckkammer verbunden ist; und
wobei der Drehmomentmotor den ersten Modulationsströmungsbereich und den zweiten Modulationsströmungsbereich moduliert, um den Druck in der ersten Druckkammer zu erhöhen und zu verringern.

4. System nach Anspruch 3, wobei der Drehmomentmotor den ersten Modulationsströmungsbereich und den zweiten Modulationsströmungsbereich moduliert, um den Druck in die erste Druckkammer, basierend auf einem elektrischen Signal, das einer Ventilstellung entspricht, zu erhöhen oder zu verringern.

5. System nach einem der vorhergehenden Ansprüche, wobei der Druck in der ersten Druckkammer als eine Öffnungskraft auf das Ventil wirkt.

6. System nach einem der vorhergehenden Ansprüche, wobei der Druck in der zweiten Druckkammer und der dritten Druckkammer als Schließkräfte auf das Ventil wirken.

7. System nach einem der vorhergehenden Ansprüche, wobei das Ventil ein Drosselklappenventil ist.

8. Hybridventilsystem, umfassend das Luftstromsteuerungssystem nach einem der vorhergehenden Ansprüche zum Steuern des Drucks in einem Strömungskanal bei einem Abschnitt des Strömungskanals stromabwärtig von dem Ventil.

9. Verfahren zum Erhöhen der Stabilität eines elektronisch gesteuerten Ventils (11; 11'), das den Druck in einem Abschnitt eines Strömungskanals regelt, der sich von dem Ventil stromabwärtig befindet, wobei das Verfahren Folgendes umfasst:
Steuern einer Ventilstellung durch ein Ventilstellglied (18; 18'), das elektrische Signale empfängt, wobei der Schritt des Steuerns der Ventilstellung durch ein Ventilstellglied Folgendes umfasst:
Zuführen von Druck von einem Abschnitt (14; 14') des Strömungskanals, stromaufwärtig vom Ventil, zu einem Drehmomentmotor (22; 22') und zu einer dritten Druckkammer (44; 44'); und
Senden eines elektrischen Signals an den Drehmomentmotor, um den Druck in einer ersten Druckkammer (40, 40') zu erhöhen oder zu verringern, um eine Öffnungs- oder eine Schließkraft für das Ventil bereitzustellen; und
Stabilisieren des Ventilstellglieds durch Bereitstellen von pneumatischer Rückkopplung an das Ventilstellglied von dem Abschnitt (16; 16') des Strömungskanals, der sich stromabwärtig von dem Ventil befindet, wobei der Schritt des Stabilisierens des Ventilstellglieds durch Bereitstellen von pneumatischer Rückkopplung an das Ventilstellglied von dem Abschnitt des Strömungskanals, der sich stromabwärtig von dem Ventil befindet, Folgendes umfasst:
Zuführen von Druck von einem Abschnitt des Strömungskanals, der sich stromabwärtig vom Ventil befindet;
weiteres Verringern des Drucks durch die Verwendung einer Druckverringerungskomponente (52, 54, 56); und
Einführen des weiter verringerten Drucks in eine zweite Druckkammer (42; 42'), um als stabilisierende Kraft auf das Ventilstellglied zu wirken.

10. Verfahren nach Anspruch 9, wobei die Druckverringerungskomponente eine Vielzahl von eingeschränkten Strömungsbereichen und eine Öffnung zu einem Umgebungsdruckbereich ist.

11. Verfahren nach Anspruch 9, wobei die Druckverringerungskomponente eine Komponente in dem stromabwärtigen Abschnitt des Strömungskanals ist, die einen Druckabfall verursacht.

12. Verfahren nach Anspruch 11, wobei die Komponente eines von einem Wärmetauscher, einem Venturi oder einer Biegung in dem Strömungskanal ist.

13. Verfahren nach Anspruch 11 oder 12, wobei ein Rückkopplungsströmungskanal (50') die zweite Druckkammer mit dem Strömungskanal stromabwärtig von der Komponente, die einen Druckabfall verursacht, verbindet.

## Revendications

1. Système de contrôle du débit d'air (10 ; 10') pour contrôler la pression et l'écoulement à travers une voie d'écoulement (12 ; 12') ayant une partie en amont (14 ; 14') et une partie en aval (16 ; 16'), le système comprenant :
un clapet (11 ; 11') qui peut s'ouvrir à différentes positions pour contrôler la pression au niveau de la partie en aval de la voie d'écoulement ;
un actionneur de clapet (18 ; 18') qui reçoit des signaux électriques pour contrôler l'ouverture et la fermeture du clapet dans lequel l'actionneur de clapet comprend :
un premier cylindre (30 ; 30') ;
un premier piston (24 ; 24') ayant un premier côté (26 ; 26') et un second côté (28 ; 28') pour le déplacement à travers le premier cylindre ;
un second cylindre (38 ; 38') relié au premier cylindre ;
un second piston (32 ; 32') ayant un premier côté (34 ; 34') et un second côté (36 ; 36') pour le déplacement à travers le second cylindre, et relié au premier piston pour se déplacer avec le premier piston ;
une première chambre de pression (40 ; 40') définie par le premier cylindre et le premier côté du premier piston ;
une deuxième chambre de pression (42 ; 42') définie par le second côté du premier piston et le premier côté du second piston ;
une troisième chambre de pression (44 ; 44') définie par le second cylindre et le second côté du second piston ;
un moteur à couple (22 ; 22') conçu pour contrôler la pression dans la première chambre de pression pour déplacer le premier piston en modulant une restriction (23u ; 23u') pour permettre à la pression provenant de la partie en amont de la voie d'écoulement de passer dans la première chambre de pression et/ou en modulant la restriction (23d ; 23d') pour permettre à la pression de sortir de la première chambre de pression dans une zone à pression ambiante ;
une voie d'écoulement de l'actionneur (41 ; 48a, 45b ; 41', 48a'48b') reliant la partie en amont de la voie d'écoulement au moteur à couple et à la troisième chambre de pression pour fournir une pression au moteur à couple et à la troisième chambre de pression ; et
un arbre d'actionneur (11c ; 11c') reliant le clapet au premier piston et au second piston qui est conçu pour transformer le mouvement du premier piston et du second piston en un changement de la position du clapet ; et
un système de rétroaction pneumatique (20 ; 20') pour stabiliser l'actionneur de clapet, dans lequel le système de rétroaction pneumatique comprend :
une voie d'écoulement de rétroaction (50 ; 50') reliant la partie en aval de la voie d'écoulement à la deuxième chambre de pression ; et
un composant de chute de pression (52, 54 ; 62) de sorte que la voie d'écoulement de rétroaction envoie une pression inférieure à la pression en aval à la deuxième chambre de pression pour coupler une position du clapet à la pression dans la partie en aval de la voie d'écoulement.

2. Système selon la revendication 1, dans lequel le composant de chute de pression comprend au moins l'un :
d'une première restriction (52) dans la voie d'écoulement de rétroaction, et d'une seconde restriction (54) dans la voie d'écoulement de rétroaction et d'une ouverture vers une zone à pression ambiante ;
d'un échangeur thermique pré-refroidisseur (62) situé dans la partie en aval de la voie d'écoulement ;
d'un coude situé dans la partie en aval de la voie d'écoulement ; et
d'un Venturi situé dans la partie en aval de la voie d'écoulement.

3. Système selon la revendication 1 ou 2, dans lequel le moteur à couple comprend :
une première zone d'écoulement de modulation (23ᵤ ; 23ᵤ') reliée à la voie d'écoulement de l'actionneur et à la première chambre de pression ; et
une seconde zone d'écoulement de modulation (23_{d} ; 23_{d}') reliée à une sortie vers une zone à pression ambiante et vers la première chambre de pression ; et
dans lequel le moteur à couple module la première zone d'écoulement de modulation et la seconde zone d'écoulement de modulation pour augmenter et diminuer la pression dans la première chambre de pression.

4. Système selon la revendication 3, dans lequel le moteur à couple module la première zone d'écoulement de modulation et la seconde zone d'écoulement de modulation pour augmenter ou diminuer la pression dans la première chambre de pression basée sur un signal électrique qui correspond à une position de clapet.

5. Système selon l'une quelconque des revendications précédentes, dans lequel la pression dans la première chambre de pression agit comme une force d'ouverture sur le clapet.

6. Système selon l'une quelconque des revendications précédentes, dans lequel les pressions dans la deuxième chambre de pression et la troisième chambre de pression agissent comme des forces de fermeture sur le clapet.

7. Système d'une quelconque revendication précédente, dans lequel le clapet est un clapet papillon.

8. Système de clapet hybride comprenant le système de contrôle du débit d'air d'une quelconque revendication précédente, pour contrôler la pression dans une voie d'écoulement au niveau d'une partie de la voie d'écoulement en aval du clapet.

9. Procédé permettant d'augmenter la stabilité d'un clapet électroniquement commandé (11 ; 11') qui régule la pression au niveau d'une partie d'une voie d'écoulement qui est en aval du clapet, le procédé comprenant :
le contrôle d'une position de clapet à travers un actionneur de clapet (18 ; 18') qui reçoit des signaux électriques, dans lequel l'étape de contrôle de la position du clapet à travers un actionneur de clapet comprend :
la fourniture d'une pression à partir d'une partie (14 ; 14') de la voie d'écoulement en amont du clapet vers un moteur à couple (22 ; 22') et vers une troisième chambre de pression (44 ; 44') ; et
l'envoi d'un signal électrique vers le moteur à couple pour augmenter ou diminuer la pression dans une première chambre de pression (40 ; 40') pour fournir une force d'ouverture ou de fermeture pour le clapet ; et
la stabilisation de l'actionneur de clapet en fournissant une rétroaction pneumatique vers l'actionneur de clapet à partir d'une partie (16 ; 16') de la voie d'écoulement qui est en aval du clapet, dans lequel l'étape de stabilisation de l'actionneur de clapet en fournissant une rétroaction pneumatique à l'actionneur de clapet à partir de la partie de la voie d'écoulement qui est en aval du clapet comprend :
la fourniture d'une pression à partir d'une partie de la voie d'écoulement qui est en aval du clapet ;
le fait de diminuer davantage la pression à travers l'utilisation d'un composant de diminution de la pression (52, 54, 56) ; et
l'introduction de la pression davantage diminuée dans une deuxième chambre à pression (42 ; 42') pour agir comme une force stabilisatrice sur l'actionneur de clapet.

10. Procédé selon la revendication 9, dans lequel le composant de diminution de la pression est une pluralité de zones d'écoulement restreint et une ouverture vers une zone à pression ambiante.

11. Procédé selon la revendication 9, dans lequel le composant de diminution de la pression est un composant dans la partie en aval de la voie d'écoulement qui crée une chute de pression.

12. Procédé selon la revendication 11, dans lequel le composant est l'un d'un échangeur thermique, d'un Venturi ou d'un coude dans la voie d'écoulement.

13. Procédé selon la revendication 11 ou 12, dans lequel une voie d'écoulement de rétroaction (50') relie la deuxième chambre de pression à la voie d'écoulement en aval du composant qui crée une chute de pression.
